# EUROPEAN PATENT SPECIFICATION

(11) **EP 3 780 325 B1**
(45) Date of publication and mention of the grant of the patent: **17.08.2022**
(21) Application number: 19909590.2
(22) Date of filing: 11.01.2019
(51) Int. Cl.: H02J 7/00, H02M 3/07

(54) **CHARGING DEVICE AND CHARGING METHOD**
AUFLADEVORRICHTUNG UND AUFLADEVERFAHREN
DISPOSITIF DE CHARGE ET PROCÉDÉ DE CHARGE

(43) Date of publication of application: 17.02.2021
(73) Proprietor: GUANGDONG OPPO MOBILE TELECOMMUNICATIONS CORP., LTD., Wusha, Chang'an Dongguan Guangdong 523860 (CN)
(72) Inventor: TIAN, Chen, Dongguan, Guangdong 523860 (CN)
(74) Representative: Hoffmann Eitle
(86) International application number: PCT/CN2019/071331
(87) International publication number: WO 2020/143020

(56) References cited:
- WO-A1-2018/188006
- CN-A- 104 993 562
- CN-A- 105 375 538
- CN-A- 107 437 826
- CN-A- 108 233 460
- US-A1- 2007 019 347
- US-A1- 2017 040 804
- US-A1- 2018 083 456
- US-A1- 2018 083 458

## Description

### TECHNICAL FIELD

This disclosure relates to the field of charging, and more particularly to a charging apparatus and a charging method.

### BACKGROUND

Currently, devices to-be-charged (such as, for example, smart phones) are becoming more popular with consumers. Nevertheless, the device to-be-charged needs to be charged frequently due to high power consumption.

However, the device to-be-charged will experience serious heating when charged in a conventional charging manner, especially when charged with high power. Therefore, how to reduce heating of the device to-be-charged is currently a problem to be solved.

US 2018/83458 A1 and US 2018/083456 A1 relate to a charger circuit for providing a charging current and voltage to a battery including a power delivery unit and a capacitive power conversion circuit.

WO 2018/188006 A1 relates to a device to be charged comprising a plurality of cells connected in series with one another; and a conversion circuit for receiving an input voltage provided by a power source providing device, converting the input voltage into a charging voltage of the plurality of cells and a power supply voltage of a system of the device to be charged, charging the plurality of cells based on the charging voltage, and supplying, based on the power supply voltage, power to the system of the device to be charged.

### SUMMARY

A charging apparatus and a charging method are provided, which can reduce heating of a device to-be-charged in charging.

In a first aspect, a charging apparatus is provided. The charging apparatus can include a boost circuit, a charging channel, and a communication control circuit. The boost circuit may be configured to boost an output voltage of a power supply device. Through the charging channel, a boosted voltage can be applied to a battery for charging. The communication control circuit can be configured to communicate with the power supply device to instruct the power supply device to adjust the output voltage of the power supply device and/or an output current of the power supply device such that an output voltage of the boost circuit and/or an output current of the boost circuit matches charging requirements of the battery.

In a second aspect, a device to-be-charged is provided. The device to-be-charged can include a battery and the charging apparatus described in the first aspect.

In a third aspect, a charging method is provided. The method can include the following. A boost circuit boosts an output voltage of a power supply device. A boosted voltage can be applied to a battery for charging through a charging channel. A communication control circuit communicates with the power supply device to instruct the power supply device to adjust the output voltage of the power supply device and/or an output current of the power supply device such that an output voltage of the boost circuit and/or an output current of the boost circuit matches charging requirements of the battery.

According to the technical solution of implementations, during charging of the battery, the output voltage of the power supply device and/or the output current of the power supply device is adjusted, such that the output voltage of the boost circuit and/or the output current of the boost circuit matches charging requirements of the battery. In this way, it is possible to reduce the need for voltage conversion in the boost circuit, which is possible to reduce heat generation of the boost circuit, thereby reducing heating of the device to-be-charged.

### BRIEF DESCRIPTION OF THE DRAWINGS

FIG 1 is a schematic structural diagram of a charging system according to implementations.
FIG 2 is a schematic structural diagram of a charging system according to other implementations.
FIG 3 is a schematic structural diagram of a charging system according to other implementations.
FIG 4 is a schematic structural diagram of a charging system according to other implementations.
FIG 5 is a schematic structural diagram of a charging system according to other implementations.
FIG 6 is a schematic diagram of a device to-be-charged according to implementations.
FIG 7 is a schematic flowchart of a charging method according to implementations.

### DETAILED DESCRIPTION

In the related art, a power supply device for charging a device to-be-charged is provided. The power supply device is operable in a constant-voltage mode, and in the constant-voltage mode, an output voltage of the power supply device remains substantially constant, such as, for example, 5V (volt), 9V, 12V, 20V, etc.

The output voltage of the power supply device is, however, not suitable for being directly applied to a battery. Instead, the output voltage of the power supply device needs to be converted by a converting circuit of the device to-be-charged, to obtain a charging voltage and/or a charging current expected by the battery of the device to-be-charged.

The converting circuit is configured to convert the output voltage of the power supply device to meet requirements on charging voltage and/or charging current of the battery.

As an example, the converting circuit can refer to a charging management module or a charging management circuit such as, for example, a charging integrated circuit (IC). The converting circuit is configured to manage the charging voltage and/or the charging current of the battery during charging of the battery. The converting circuit functions as a voltage feedback module and/or a current feedback module to implement management of the charging voltage and/or the charging current of the battery respectively.

For example, a charging process of the battery can include one or more of a trickle charging stage, a constant-current charging stage, and a constant-voltage charging stage. In the trickle charging stage, the converting circuit can utilize a current feedback loop such that a current flowing into the battery in the trickle charging stage meets requirements on charging current (such as, for example, a first charging current) of the battery. In the constant-current charging stage, the converting circuit can utilize the current feedback loop such that a current flowing into the battery in the constant-current charging stage meets requirements on charging current (such as, for example, a second charging current, which can be larger than the first charging current) of the battery. In the constant-voltage charging stage, the converting circuit can utilize a voltage feedback loop such that a voltage applied to the battery in the constant-voltage charging stage meets requirements on charging voltage of the battery.

As an example, if the output voltage of the power supply device is higher than the charging voltage expected by the battery, the converting circuit performs buck conversion on the output voltage of the power supply device, such that a charging voltage subjected to buck conversion (that is, bucked voltage) meets requirements on charging voltage of the battery. As another example, if the output voltage of the power supply device is lower than the charging voltage expected by the battery, the converting circuit performs boost conversion on the output voltage of the power supply device, such that a charging voltage subjected to boost conversion (that is, boosted voltage) meets requirements on charging voltage of the battery.

As an example, the output voltage of the power supply device can be a constant 5V. When the battery includes a single cell, the converting circuit (such as, for example, a buck circuit) performs buck conversion on the output voltage of the power supply device, such that the charging voltage subjected to buck conversion meets requirements on charging voltage of the battery.

In another example, the output voltage of the power supply device can be a constant 5V. When the power supply device charges a battery having two or more cells coupled in series, the converting circuit (such as, for example, a boost circuit) performs boost conversion on the output voltage of the power supply device, such that the charging voltage subjected to boost conversion meets requirements on charging voltage of the battery.

Due to limitations of the converting circuit in terms of low conversion efficiency, unconverted electrical energy may dissipate as heat, and such heat will accumulate inside the device to-be-charged. In addition, design space and heat dissipation space of the device to-be-charged are both very small (for example, mobile terminals are becoming lighter and thinner in physical size, and at the same time, a large number of electronic components are densely arranged inside the mobile terminal to improve performance of the mobile terminal), which not only makes design of the converting circuit more difficult, but also makes it difficult to remove heat accumulated inside the device to-be-charged in time, which can cause the device to-be-charged to malfunction.

For example, heat accumulated in the converting circuit may cause heat interference on electronic components near the converting circuit, which can result in the electronic components to malfunction. In another example, heat accumulated in the converting circuit may shorten the service life of the converting circuit and the service life of the electronic components near the converting circuit. As another example, heat accumulated in the converting circuit may cause heat interference on the battery, which thus leads to abnormal charging and discharging of the battery. In yet another example, heat accumulated in the converting circuit may result in rise in temperature of the device to-be-charged and therefore affects user experience when the device to-be-charged is in use during charging. In another example, heat accumulated in the converting circuit may cause the converting circuit to short circuit, and as a result, the output voltage of the power supply device may be directly applied to the battery, thus causing a charging abnormality. If the battery is overcharged for a long time, it may even cause the battery to explode, endangering the user's safety.

Therefore, there is a need to solve the problem with reducing heating of the device to-be-charged.

The power supply device according to implementations is a power supply device with an adjustable output voltage. The power supply device can acquire state information of the battery. The state information of the battery can include a present electric quantity, a present voltage, a present temperature, a charging voltage and/or a charging current, etc. The power supply device can adjust the output voltage thereof according to the state information of the battery acquired, to meet requirements on charging voltage and/or charging current of the battery. The output voltage adjusted by the power supply device can be directly applied to the battery for charging (hereinafter referred to as "direct charging"). In addition, in the constant-current charging stage of the battery, the output voltage adjusted by the power supply device can be directly applied to the battery for charging.

The power supply device can function as the voltage feedback module and the current feedback module to achieve management of the charging voltage and/or the charging current of the battery.

The phrase, "the power supply device adjusts the output voltage thereof according to the state information of the battery acquired" can include the following. The power supply device acquires in real time the state information of the battery and adjusts the output voltage of the power supply device according to the real-time state information of the battery acquired each time, to meet requirements on charging voltage and/or charging current of the battery.

The phrase, "the power supply device adjusts the output voltage thereof according to the state information of the battery acquired in real time" can include the following. With an increase in voltage of the battery during charging, the power supply device acquires present state information of the battery at different time points during charging and adjusts in real time the output voltage of the power supply device according to the present state information of the battery, to meet requirements on charging voltage and/or charging current of the battery.

For example, the charging process of the battery can include at least one of the trickle charging stage, the constant-current charging stage, and the constant-voltage charging stage. In the trickle charging stage, the power supply device can apply a first charging current to the battery for charging, to meet requirements on charging current of the battery. The first charging current may be a constant direct current (DC) current. In the constant-current charging stage, the power supply device can utilize a current/voltage feedback loop such that a current applied to the battery by the power supply device in the constant-current charging stage meets requirements on charging current (such as, for example, a second charging current) of the battery. The second charging current can be a pulsating waveform current. The second charging current can be larger than the first charging current, which means, for example, that a peak current of the pulsating waveform current in the constant-current charging stage is larger than the constant DC current in the trickle charging stage, and "constant-current" of the "constant-current charging stage" means that a peak value (that is, peak current) or an average value of the pulsating waveform current remains substantially constant. In the constant-voltage charging stage, the power supply device can utilize the voltage/current feedback loop such that a voltage applied to the device to-be-charged by the power supply device in the constant-voltage charging stage remains constant (that is, a constant DC voltage).

The above charging process is applicable to both a battery including a single cell and a battery including multiple cells.

For a battery including multiple cells coupled in series, a charging stage of the battery can also include the trickle charging stage, the constant-current charging stage, and the constant-voltage charging stage, and the charging process in each charging stage is similar to that described above. In each charging stage, a charging voltage or a charging current provided by the power supply device can meet total voltage or current requirements of the multiple cells in the stage.

For instance, in different charging stages, a charging voltage or a charging current of each cell may need to be balanced, that is, a voltage across each cell remains the same. In the trickle charging stage, the voltage across each cell can be equal, and a current flowing into each cell meets current requirements of the cell in the trickle charging stage. In the constant-current charging stage, the voltage across each cell can be equal, and the current flowing into each cell meets current requirements of the cell in the constant-current charging stage. In the constant-voltage charging stage, the voltage across each cell can be equal, and the voltage across each cell meets voltage requirements of the cell in the constant-voltage charging stage.

It should be noted that, for some batteries, the charging process may include only the trickle charging stage and the constant-current charging stage without the constant-voltage charging stage. This disclosure is not limited in this regard. For example, the battery can be fully charged in a multi-stage constant-current charging manner in the constant-current charging stage, which will be described in detail below.

As an example, the power supply device according to implementations is mainly configured to control the constant-current charging stage of the battery in the device to-be-charged. In other examples, control of the trickle charging stage and the constant-voltage charging stage of the battery in the device to-be-charged is achieved cooperatively by the power supply device and an extra charging chip in the device to-be-charged. Compared with the constant-current charging stage, a charging power received by the battery in the trickle charging stage or in the constant-voltage charging stage may be relatively low, and therefore loss of conversion efficiency and heat accumulation of the charging chip in the device to-be-charged are acceptable. It should be noted that, the constant-current charging stage or a constant-current stage referred to herein relates to a charging mode in which an output current of the power supply device is controlled, and in such a charging mode, the output current of the power supply device is however not required to remain completely constant. For example, a peak value or an average value of the pulsating waveform current outputted by the power supply device can remain substantially constant or remains substantially constant within a certain time period. In practice, charging can be performed in a multi-stage constant current manner in the constant-current charging stage.

Multi-stage constant current charging can include *N* constant-current stages, where *N* is an integer not less than two (*N* >= 2). In the multi-stage constant current charging, a first stage begins with a pre-determined charging current. The *N* constant-current stages of the multi-stage constant current charging are executed sequentially from the first stage to the *N^{th}* stage. When a former constant-current stage ends and a next constant-current stage begins, the peak value or average value of the pulsating waveform current may decrease. When a voltage of the battery reaches a threshold charging cut-off voltage, the multi-stage constant current charging proceeds to a subsequent constant-current stage, that is, the former constant-current stage ends and the next constant-current stage begins. Current conversion between two adjacent constant-current stages may be gradual or in a step-like manner.

In addition, when the output current of the power supply device is a pulsating DC, a constant-current mode relates to a charging mode in which a peak value or an average value of the pulsating DC is controlled, that is, a peak value of the output current of the power supply device is controlled not to exceed a current corresponding to the constant-current mode. Furthermore, when the output current of the power supply device is an alternating current (AC), the constant-current mode relates to a charging mode in which a peak value of the AC is controlled.

It should be noted that, the device to-be-charged according to implementations, can be a terminal. The "terminal" can include but is not limited to a device coupled via a wired line and/or a wireless interface to receive/transmit communication signals. Examples of the wired line may include, but are not limited to, at least one of a public switched telephone network (PSTN), a digital subscriber line (DSL), a digital cable, a direct connection cable, and/or other data connection lines or network connection lines. Examples of the wireless interface may include, but are not limited to, a wireless interface with a cellular network, a wireless local area network (WLAN), a digital television network (such as, for example, a digital video broadcasting-handheld (DVB-H) network), a satellite network, an amplitude modulation-frequency modulation (AM-FM) broadcast transmitter, and/or with other communication terminals. A communication terminal configured to communicate via a wireless interface may be called a, "wireless communication terminal," "wireless terminal," and/or "mobile terminal." Examples of a mobile terminal may include, but are not limited to, a satellite or cellular telephone, a personal communication system (PCS) terminal capable of cellular radio telephone, data processing, fax, and/or data communication, a personal digital assistant (PDA) equipped with radio telephone, pager, Internet/Intranet access, web browsing, notebook, calendar, and/or global positioning system (GPS) receiver, and a conventional laptop or a handheld receiver or other electronic devices equipped with radio telephone transceiver. In addition, the device to-be-charged or the terminal according to implementations can also include a power bank. The power bank can be charged by the power supply device and thus store energy to charge other electronic devices.

Additionally, according to implementations, when a pulsating waveform voltage outputted by the power supply device is directly applied to the battery of the device to-be-charged for charging, the charging current can be characterized as a pulsating wave (such as, for example, a steamed-bun wave). It can be understood that, the charging current can be applied to the battery for charging in an intermittent manner. A period of the charging current may vary with a frequency of an input AC (such as, for example, an AC power grid). For example, a frequency corresponding to the period of the charging current is *N* times or *N* times the reciprocal of the frequency of the power grid (where *N* is an integer). When the charging current is applied to the battery for charging in an intermittent manner, a current waveform of the charging current may be composed of a pulse or a group of pulses synchronized with the power grid.

As an example, during charging of the battery (such as, for example, at least one of the trickle charging stage, the constant-current charging stage, and the constant-voltage charging stage), a pulsating DC (of which the direction is constant and the magnitude varies with time), an AC (of which both the direction and the magnitude vary with time), or a DC (that is, constant DC, of which the direction and the magnitude are both constant) outputted by the power supply device can be applied to the battery.

Since a switching charger can adjust its own output according to charging requirements of the battery, a conventional converting circuit can be implemented using the switching charger, through which the battery is charged. However, a conversion efficiency of the switching charger may be limited by a voltage difference between an input voltage of the switching charger and an output voltage of the switching charger. When the voltage difference between the input voltage of the switching charger and the output voltage of the switching charger is large, the conversion efficiency of the switching charger can be low and a significant amount of heat can be generated-especially during charging with high power, energy loss and heat generation are even more serious. For products that are light and thin, and have high temperature requirements, such as a mobile phone, the switching charger may be unable to meet performance requirements. Therefore, implementations provide a charging apparatus, which can allow for reduced heating of the device to-be-charged during charging.

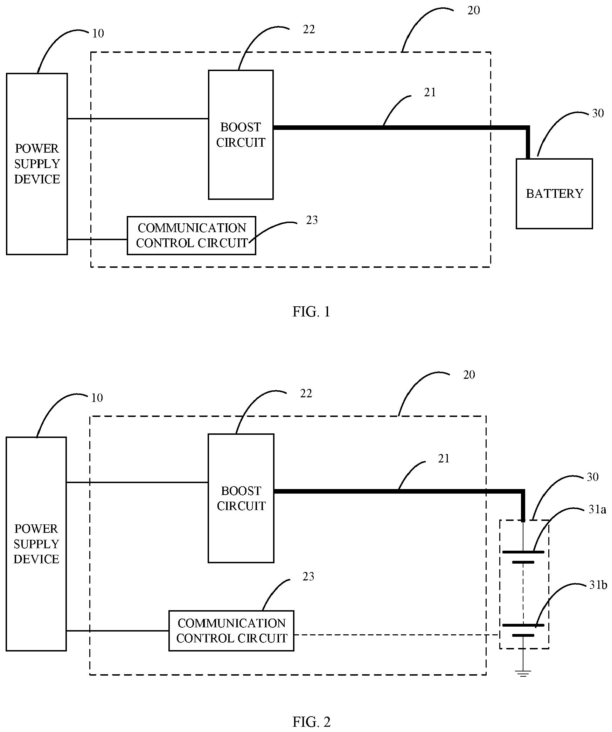

As illustrated in FIG 1, a charging apparatus 20 includes a boost circuit 22 and a charging channel 21. The boost circuit 22 is configured to boost a first charging voltage. Through the charging channel 21, a boosted voltage is applied to a battery 30 for charging.

In addition, the charging apparatus 20 further includes a communication control circuit 23. The communication control circuit 23 is configured to communicate with a power supply device 10 to instruct the power supply device 10 to adjust an output voltage of the power supply device and/or an output current of the power supply device such that an output voltage of the boost circuit 22 and/or an output current of the boost circuit 22 matches charging requirements of the battery.

The boost circuit 22 can have a conversion efficiency that is higher than the converting circuit described above. In other words, the conversion efficiency of the boost circuit 22 may be higher than that of the charging management module. There is no specific restriction on the type of the boost circuit in implementations, as long as, for example, the conversion efficiency of the boost circuit is higher than that of the charging management circuit. In some implementations, the boost circuit 22 is a charge pump. The charge pump may be mainly composed of switch components. Since the amount of heat generated when a current flows through switch components can be relatively small, and for example, almost equal to the amount of heat generated when a current flows directly through a wire, by using the charge pump as the boost circuit 22, the voltage can be boosted with a relative reduction in heat generation.

During charging of the battery with the boosting circuit, requirements on charging voltage and/or charging current of the battery can be met by adjusting, by the power supply device, the output voltage of the power supply device and/or the output current of the power supply device-instead of completely relying on the boost circuit. In other words, a boost function of the boost circuit can be partly performed by the power supply device, and only a minority of the boost function performed by the boost circuit. In this way, it is possible to reduce heating of the boost circuit due to voltage conversion.

In addition, since the conversion efficiency of the boost circuit is higher than that of the charging management module, by using the boost circuit (such as, for example, the charge pump) for charging, less heat is generated in the boost circuit, thereby further reducing heating of the device to-be-charged.

The boost factor of the boost circuit 22 is not limited in implementations. The boost factor may be a ratio of the output voltage of the boost circuit to the input voltage of the boost circuit, for example, 2:1, 3:1, 3 :2, 4:1, etc. The boost factor specified for the charging apparatus can be determined according to the output voltage of the power supply device and a voltage of the battery.

For example, if the output voltage of the power supply device is nearly half of the voltage of the battery, a boost circuit with a boost factor of 2:1 is used.

As to a boost factor of 2:1, for example, without considering conversion efficiency, a ratio of the output current of the boost circuit to an input current of the boost circuit is 1:2.

The battery, according to implementations, may be a battery including multiple cells. In this situation, the boost circuit is configured to boost the first charging voltage to be applied to the multiple cells for charging.

Conventionally, when a battery including multiple cells is charged, a power supply device of which an output voltage matches the voltage of the battery is generally used for charging. For instance, when the voltage of the battery is about 8V, the output voltage of the power supply device is required to be higher than 8V, for example, the battery can be charged only when the output voltage of the power supply device is at least higher than 10V Therefore, if a battery of high voltage (that is, high voltage battery) needs to be charged, it is necessary to design a new power supply device that matches the high voltage battery for charging. This can increase cost, and may not allow for compatibility with a common power supply device (such as, for example, a conventional power adaptor). By adopting the technical solution of implementations described herein, a battery requiring a high voltage can be compatible with a common power supply device with a low output voltage, such as, for example, a power supply device with a 5V output voltage, and the output voltage of the power supply device is boosted by the boost circuit to meet present charging requirements of the battery. With aid of the charging apparatus provided herein, a conventional adaptor can be used to charge the high voltage battery (such as, for example, a battery including multiple cells coupled in series), thereby saving cost.

The type of the power supply device 10 is not limited in implementations. For example, the power supply device 10 may be an adaptor, a power bank, an on-board charger, or a computer.

The battery according to implementations may be a battery including a single cell. The battery including a single cell may have a high voltage. Alternatively, the battery can include multiple cells, and the battery including multiple cells may also have a high voltage.

As illustrated in FIG 2, battery 30 includes multiple cells (that is, at least two cells) coupled in series. The multiple cells coupled in series can divide a charging voltage provided by the power supply device 10 during charging. A first cell 31a and a second cell 31b illustrated in FIG 2 may be any two cells of the multiple cells or any two groups of cells in the multiple cells.

The battery 30 may be one battery or multiple batteries. In other words, the first cell and the second cell coupled in series may be encapsulated into one battery pack to form one battery or encapsulated into multiple battery packs to form multiple batteries. For example, the battery 30 is one battery which includes the first cell and the second cell coupled in series. For another example, the battery 30 is two batteries, where one battery includes the first cell and the other battery includes the second cell.

In some implementations, the communication control circuit 23 is configured to communicate with the power supply device 10 to instruct, according to state information of the battery 30, the power supply device 10 to adjust the output voltage of the power supply device and/or the output current of the power supply device, where the state information of the battery includes at least one of: a present electric quantity, a present voltage, a present temperature, a charging voltage, and a charging current.

In some implementations, the first charging voltage can be the output voltage of the power supply device 10. The boost circuit 22 has an input end electrically coupled with an output end of the power supply device 10. The communication control circuit 23 is configured to instruct, according to the state information of the battery, the power supply device to adjust the output voltage of the power supply device and/or the output current of the power supply device such that the output voltage of the boost circuit 22 and/or the output current of the boost circuit 22 matches present charging requirements of the battery 30.

In other examples, the first charging voltage is obtained by converting the output voltage of the power supply device 10 through other circuits (such as, for example, a converting circuit). The output end of the power supply device 10 is electrically coupled with an input end of the converting circuit. An output end of the converting circuit is electrically coupled with the input end of the boost circuit 22. The boost circuit 22 is configured to boost an output voltage of the converting circuit. The communication control circuit 23 is configured to adjust the output voltage of the power supply device 10 and/or the output current of the power supply device 10 according to the state information of the battery such that the output voltage of the boost circuit 22 and/or the output current of the boost circuit 22 matches present charging requirements of the battery 30.

The phrase "the output voltage of the boost circuit 22 and/or the output current of the boost circuit 22 matches present charging requirements of the battery 30" can include the following. The output voltage of the power supply device 10 and/or the output current of the power supply device 10 can be boosted by the boost circuit 22 such that an output voltage of the charging channel 21 and/or an output current of the charging channel 21 matches a charging voltage and/or a charging current currently required by the battery 30. Alternatively, the output voltage of the power supply device 10 and/or the output current of the power supply device 10 can be boosted by the boost circuit 22 such that the output voltage of the charging channel 21 and/or the output current of the charging channel 21 meets charging requirements of the battery 30, including requirements on charging voltage and/or charging current of the battery 30).

It should be understood that, the phrase "the output voltage of the charging channel 21 and/or the output current of the charging channel 21 matches the charging voltage and/or the charging current currently required by the battery 30" can include the following. A voltage value and/or a current value of an output DC of the charging channel 21 can be equal to a charging voltage value and/or a charging current value required by the battery 30 or the difference therebetween is within a preset range (for example, the voltage value is 100mV (millivolt)~200mV higher or lower than the charging voltage value, the current value is 0.001A (ampere)~0.005A larger or smaller than the charging current value, etc.)

The phrase "the communication control circuit 23 instructs the power supply device 10 to adjust the output voltage of the power supply device and/or the output current of the power supply device" can include the following. The communication control circuit 23 may send the state information of the battery directly to the power supply device 10, and the power supply device 10 can adjust its output voltage and/or output current according to the state information of the battery. In this situation, the power supply device 10 can determine, by itself, whether to increase or decrease the output voltage thereof.

Alternatively, the phrase "the communication control circuit 23 instructs the power supply device 10 to adjust the output voltage of the power supply device and/or the output current of the power supply device" can include the following. The communication control circuit 23 sends, according to the state information of the battery, adjustment information to the power supply device 10 to instruct the power supply device 10 to increase or decrease the output voltage of the power supply device and/or the output current of the power supply device. Then the power supply device 10 adjusts its output voltage and/or output current according to the adjustment information. In this way, the power supply device 10 can adjust its output voltage to a required voltage through one feedback only without multiple times of feedback and confirmation, thereby saving time for loop response.

The phrase "adjust the output voltage of the power supply device 10 and/or the output current of the power supply device 10 according to the state information of the battery" can include the following. The charging voltage and/or the charging current currently required by the battery 30 is determined according to the state information of the battery, and then the output voltage of the power supply device 10 and/or the output current of the power supply device 10 is adjusted according to the charging voltage and/or the charging current currently required by the battery 30.

The manner in which the charging current currently required by the battery is determined according to the state information of the battery is not particularly limited in implementations. For convenience of description, the charging current currently required by the battery is hereinafter referred to as a "target charging current."

As an example, a correspondence relationship (also referred to as a charging curve) between the state information of the battery and the target charging current can be set in advance. The communication control circuit 23 can acquire the correspondence relationship, and during charging, search for a corresponding target charging current according to present state information of the battery. For example, when the battery 30 is charged to a certain charging stage, the communication control circuit 23 acquires, according to the correspondence relationship, the target charging current corresponding to the charging stage. The output current of the power supply device 10 can be adjusted to the target charging current, such that the target charging current passes through the charging channel to be applied to the battery 30 for charging. The adjustment process can be simplified by setting the correspondence relationship between the state information of the battery and the target charging current in advance.

As another example, the communication control circuit 23 acquires in real time the state information of the battery 30 during charging, and then determines by itself the target charging current according to the state information of the battery acquired. In this situation, the communication control circuit 23 may be required to be capable of determining the target charging current. Such a manner of adjustment can be more flexible because the communication control circuit can adjust the charging voltage and/or the charging current according to a charging state of the battery at any time. Adjustment of the charging voltage and/or the charging current of the battery during charging may be more accurate.

The correspondence relationship between the state information of the battery and the target charging current may refer to a correspondence relationship between the present voltage and/or the present electric quantity of the battery and the target charging current. The charging current required by the battery may vary with a voltage and/or an electric quantity of the battery. For example, if the voltage and/or the electric quantity of the battery is low, the charging current required by the battery can be relatively large. Accordingly, the target charging current can be set to be large. If the voltage and/or the electric quantity of the battery is high, for example, when the battery is about to be fully charged, the charging current required by the battery may be relatively small. Accordingly, the target charging current can be set to be small. Alternatively, the correspondence relationship between the state information of the battery and the target charging current may refer to a correspondence relationship between the present temperature of the battery and the target charging current. The target charging current can be set according to different temperatures of the battery. For example, if the temperature of the battery is low, the target charging current can be set to be large to increase charging speed. If the temperature of the battery is high, the target charging current can be set to be relatively small to control heating during charging. Alternatively, the correspondence relationship between the state information of the battery and the target charging current may refer to a correspondence relationship between a present charging voltage and/or a present charging current of the battery and the target charging current. A charging process of the battery can include multiple charging stages. In each charging stage, a charging current applied for charging can be different. When a present charging stage ends, proceed to a next charging stage. Therefore, a charging current corresponding to the next charging stage can be determined according to a charging current corresponding to the present charging stage, and the charging current corresponding to the next charging stage is the target charging current.

The correspondence relationship between the state information of the battery and the target charging current can also be any combination of the above, which is not limited herein.

There is no specific restriction on the manner in which the output voltage of the power supply device 10 and/or the output current of the power supply device 10 is adjusted according to the target charging current.

As an example, the communication control circuit 23 can determine, according to the target charging current and the present charging current of the battery, to instruct the power supply device 10 to increase or decrease the output current thereof. When the target charging current is larger than the present charging current of the battery, the communication control circuit 23 can instruct the power supply device 10 to increase the output current thereof. When the target charging current is smaller than the present charging current of the battery, the communication control circuit 23 can instruct the power supply device 10 to decrease the output current thereof.

As another example, the communication control circuit 23 can send the target charging current directly to the power supply device 10, such that the power supply device 10 can compare the target charging current with the output current of the power supply device to determine to increase or decrease the output current of the power supply device. For example, when the boost circuit is a boost circuit with a boost factor of 2:1, that is, the output current of the boost circuit is half of the input current of the boost circuit, the boost circuit can convert the output current of the power supply device 10 *I* into *I*/2 to be applied to the battery for charging. In this case, the power supply device 10 can compare half of the target charging current with the output current of the power supply device. Upon determining that the output current of the power supply device 10 is larger than half of the target charging current, the power supply device 10 can decrease the output current thereof. Upon determining that the output current of the power supply device 10 is smaller than half of the target charging current, the power supply device 10 can increase the output current thereof.

In an example, the output current of the power supply device 10 can be set to have multiple grades. When a difference between the output current of the power supply device 10 and the target charging current is large, the communication control circuit 23 can adjust the output current of the power supply device 10 by multiple grades. Current of each grade can be set to a fixed value, such as, for example, 5mA (milliampere), 10mA, etc. When the difference between the output current of the power supply device 10 and the target charging current is small, the communication control circuit 23 adjusts the output current of the power supply device 10 by one grade.

The order of communication between the communication control circuit 23 and the power supply device 10 is not limited in implementations. For example, the communication control circuit 23 initiates communication to instruct the power supply device 10 to adjust the output voltage of the power supply device and/or the output current of the power supply device. In another example, the power supply device 10 initiates communication to inquire the communication control circuit 23 whether to adjust the output voltage of the power supply device 10 and/or the output current of the power supply device 10, and if the output voltage of the power supply device 10 and/or the output current of the power supply device 10 needs to be adjusted, the communication control circuit 23 responds to the inquiry of the power supply device 10 to instruct the power supply device 10 to adjust the output voltage of the power supply device and/or the output current of the power supply device.

The communication control circuit 23 can detect or monitor, in real time, the state information of the battery. The communication control circuit 23 can detect or monitor the state information of the battery 30 in various ways. For example, the state information of the battery can be detected with a detecting circuit or in other ways, which is not limited herein.

Control functions of the communication control circuit 23 may be implemented by, for example, a micro control unit (MCU) or an application processor (AP) of the device to-be-charged, or may be implemented cooperatively by the MCU and the AP.

As an example, constant-current charging may be performed on a battery having two cells. Charging of the battery can be performed in a multi-stage constant current manner. In other words, multiple constant-current charging stages can be set, and different constant-current charging stages correspond to different charging currents. The boost circuit 22 can be a boost circuit with a boost factor of 2:1. Without considering voltage conversion efficiency and path loss, when the charging current required by the battery is *I₁*, the output current of the power supply device 10 needs to be adjusted to *I₁*/2. When the charging current required by the battery is *I₂*, the output current of the power supply device 10 needs to be adjusted to *I₂*/2*.*

The constant-current charging stage of the battery 30 includes *n* charging stages, and *n* charging currents [*I₁*, *I₂*, *I₃*, ... *Iₙ*] (*n*≥1) are set for the *n* charging stages respectively, where *I₁* ≥*I₂*≥*I₃...*≥*Iₙ.* A charging cut-off voltage can be set for each charging stage, and the charging cut-off voltage of each charging stage may be the same or different. As an example, for each of the *n* charging stages, the charging cut-off voltage of the charging stage can be set differently according to the charging current corresponding to the charging stage. For example, when the charging current corresponding to the charging stage is large, the charging cut-off voltage is set to be low. When the charging current corresponding to the charging stage is small, the charging cut-off voltage is set to be high. As another example, the charging cut-off voltage of each of the *n* charging stages is the same and is set to be a threshold voltage *Vₙ* which is higher than a standard cut-off voltage. The threshold voltage *Vₙ* relates to the structure, the materials, etc. of the battery. In an example, if the standard cut-off voltage of the battery is *Vo, Vₙ* can be set to be *V₀*+*ΔV.* For example, *ΔV* can be set to a value between 0.05V and 0.1V. Charging currents *I₁*, *I₂*, ... *Iₙ* also relate to the structure, the materials, etc. of the battery. For example, *Iₙ* can be 700mA.

In a first charging stage, the communication control circuit 23 can communicate with the power supply device 10 to instruct the power supply device 10 to adjust the output current of the power supply device to *I₁*/2 to ensure that the charging current applied to the battery is *I₁*. In addition, the communication control circuit 23 can monitor in real time the voltage of the battery 30. Upon detecting that the battery 30 has been charged to a first charging cut-off voltage, it indicates that charging of the battery 30 needs to proceed to a next charging stage. In this case, it is necessary to adjust the charging current applied to the battery 30 to a charging current *I₂* corresponding to a second charging stage. Upon detecting that the voltage of the battery 30 has reached the first charging cut-off voltage, the communication control circuit 23 communicates with the power supply device 10 to instruct the power supply device 10 to decrease the output current of the power supply device, such that the output current of the power supply device 10 is adjusted to *I₂*/2 until the voltage of the battery 30 reaches a second charging cut-off voltage. The above steps can be repeated until a charging current *Iₙ* corresponding to a final charging stage (that is, an *n^{th}* charging stage) is applied for charging until an *n^{th}* charging cut-off voltage is reached.

The phrase "the output current of the power supply device 10 is *I₁*/2" described above however does not mean that the output current of the power supply device 10 remains constant, and can mean that, for example, a peak value or an average value of a pulsating waveform current outputted by the power supply device 10 remains substantially constant, or for example, if the output current of the power supply device 10 is about *I₁*/2, the output current of the power supply device may be (1+2%) *I₁*/2.

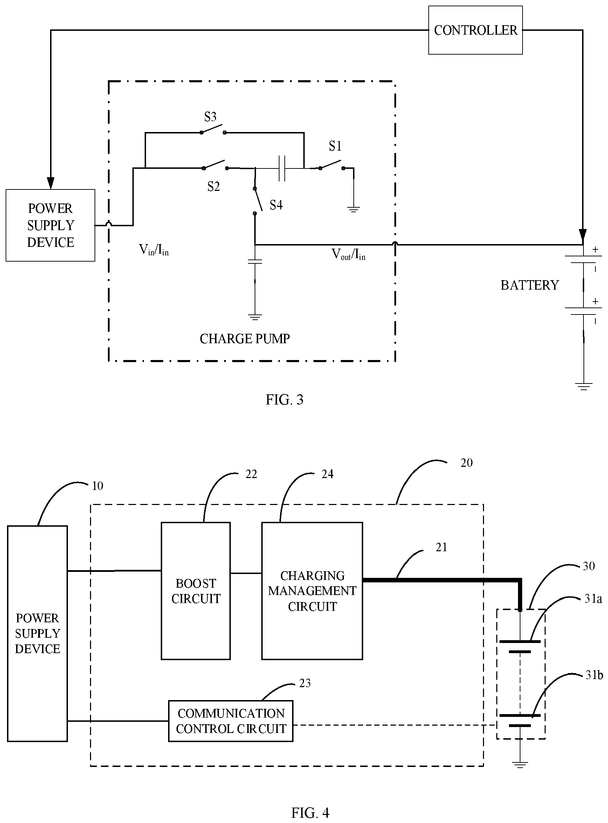

In the following, a charging process according to implementations will be described with reference to FIG 3. The charge pump illustrated in FIG 3 is a voltage doubler charge pump. During working of the charge pump, voltage conversion can be achieved through the following two stages. In a first stage, switches S1 and S2 are turned off (that is, in an off-state), and switches S3 and S4 are turned on (that is, in an on-state). A capacitor is charged until a voltage thereof is equal to an input voltage of the charge pump. In a second stage, switches S3 and S4 are turned off, and switches S1 and S2 are turned on. Since a voltage drop across the capacitor does not change immediately, an output voltage of the charge pump changes suddenly to twice the input voltage of the capacitor. As such, voltage doubling can be achieved.

An input voltage of the charge pump is *Vᵢₙ*, an input current of the charge pump is *Iᵢₙ*, an output voltage of the charge pump is *Vₒᵤₜ*, and an output current of the charge pump is *Iₒᵤₜ.* The charge pump can have an input end electrically coupled with the output end of the power supply device and have an output end electrically coupled with the battery. The battery illustrated in FIG 3 includes two cells. A controller can monitor continuously a charging state of the battery and report the charging state of the battery to the power supply device, such that the power supply device adjusts the output voltage of the power supply device and/or the output current of the power supply device according to the charging state of the battery.

It can be understood that, the controller illustrated in FIG 3 may be the communication control circuit according to implementations.

As to the charge pump illustrated in FIG 3, without considering conversion efficiency, *Vₒᵤₜ*=2^{∗}*Vᵢₙ*, and *Iₒᵤₜ*=*Iᵢₙ*/2. During constant-current charging of the battery, if a charging current expected by the battery is *Iₘ*, an output constant current of the power supply device is set to be *Iᵢₙ*=*Iₘ*/2. As such, through voltage doubling by the charge pump, the output current of the charge pump can be *Iₒᵤₜ*=*Iₘ*, which can allow for charging current requirements of the battery to be met.

In the constant-current charging stage of the battery, charging is usually performed in a multi-stage constant current manner. Requirements on charging current of the battery can vary between different charging stages. As an example, the constant-current charging of the battery includes *n* charging stages. Charging currents in a first charging stage to an *n^{th}* charging stage are *Iₘ₁*, *Iₘ₂*, ..., *Imn* respectively, where *Iₘ₁≥Iₘ₂≥Iₘ₃...≥Iₘₙ.* In the first charging stage, if a charging current applied to the battery is required to be constant current *Iₘ₁*, the output constant-current of the power supply device is set to be *Iᵢₙ*=*Iₘ₁*/2. Upon detecting that the battery is charged to a voltage specified for the first stage, the controller controls the charging current applied to the battery to be *Iₘ₂.* At this time, the controller can inform the power supply device to decrease the output current of the power supply device and adjust the output constant-current of the power supply device to be *Iᵢₙ*=*Iₘ₂*/2. Similarly, the controller can continuously set the output constant current of the power supply device to adjust a constant current applied to the battery until the battery is fully charged.

In some implementations, the charging apparatus 20 further includes a charging management circuit 24. As illustrated in FIG 4, the charging management circuit 24 can be configured to manage the output voltage of the boost circuit 22, where a voltage difference between an input voltage of the charging management circuit 24 and an output voltage of the charging management circuit 24 (hereinafter, "voltage difference of the charging management circuit 24" for short) is smaller than a voltage difference between the input voltage of the boost circuit 22 and the output voltage of the charging management circuit 24.

In the technical solution of implementations, the boost circuit 22 can share the function of the charging management circuit 24 to boost the output voltage of the power supply device 10. Compared prior art solutions, in which only the charging management circuit is used for charging, the voltage difference of the charging management circuit 24 of the present application can be decreased, thereby reducing heating of the charging management circuit 24.

In some implementations, the boost circuit 22 has a conversion efficiency that is higher than the charging management circuit 24. The charging management circuit 24 may be an inductance based charging management circuit. In this case, as to the charging management circuit 24, an inductive buck circuit can be used for buck conversion, or an inductive boost circuit can be used for boost conversion. As to the boost circuit 22, a capacitive boost circuit (such as, for example, the charge pump) can be used for boost conversion, or a boost circuit integrated with an inductive boost circuit and a capacitive boost circuit can be used for boost conversion.

The charging management circuit 24 can be configured to perform constant-voltage and/or constant-current control on the output voltage of the boost circuit 22 to obtain the charging voltage and/or the charging current expected by the battery. The charging management circuit 24 can have an input end electrically coupled with an output end of the boost circuit 22 and have an output end electrically coupled with the battery. The charging management circuit 24 can receive the output voltage of the boost circuit 22 and/or the output current of the boost circuit 22 and convert the output voltage of the boost circuit 22 and/or the output current of the boost circuit 22 into the charging voltage and/or the charging current currently required by the battery 30 to be applied to the battery 30 for charging.

The charging management circuit 24 may have a boost function or a buck function. For example, the charging management circuit can boost the output voltage of the boost circuit to be applied to the battery 30 for charging. Alternatively, the charging management circuit can decrease the output voltage of the boost circuit to be applied to the battery for charging.

Whether the charging management circuit 24 works in a boost mode (that is, enables the boost function) or works in a buck mode (that is, enables the buck function) may depend on the output voltage of the boost circuit 22 and the voltage of the battery 30. When the output voltage of the boost circuit 22 is higher than the voltage of the battery 30, the charging management circuit 24 can switch to the buck mode to decrease the output voltage of the boost circuit 22. When the output voltage of the boost circuit 22 is lower than the voltage of the battery 30, the charging management circuit 24 can switch to the boost mode to boost the output voltage of the boost circuit 22.

In some implementations, the communication control circuit 23 is further configured to communicate with the power supply device 10 to instruct the power supply device 10 to adjust the output voltage of the power supply device and/or the output current of the power supply device, to adjust the voltage difference of the charging management circuit 24.

In some implementations, the communication control circuit 23 is configured to communicate with the power supply device 10 according to the voltage difference of the charging management circuit 24, to instruct the power supply device 10 to adjust the output voltage of the power supply device to reduce the voltage difference of the charging management circuit 24.

The conversion efficiency of the charging management circuit 24 is positively correlated to a voltage difference between the input end of the charging management circuit and the output end of the charging management circuit. Therefore, by decreasing the voltage difference of the charging management circuit 24, heating of the charging management circuit 24 can be reduced, thereby further reducing heating of the device to-be-charged.

In some implementations, in terms of instructing the power supply device 10 to adjust the output voltage of the power supply device, the communication control circuit can be configured to instruct the power supply device 10 to adjust the output voltage of the power supply device such that the voltage difference of the charging management circuit 24 is within a preset range.

The communication control circuit 23 can detect or monitor in real time the voltage difference of the charging management circuit 24. The communication control circuit 23 can detect or monitor in real time the voltage difference of the charging management circuit 24 in various ways. For example, the voltage difference of the charging management circuit 24 can be detected with a detecting circuit or in other ways, which is not limited herein.

Control functions of the communication control circuit 23 may be implemented by, for example, the MCU or the AP of the device to-be-charged, or may be implemented cooperatively by the MCU and the AP.

The order of communication between the communication control circuit 23 and the power supply device 10 is not limited in implementations. For example, the communication control circuit 23 can initiate the communication to instruct the power supply device 10 to adjust the output voltage of the power supply device and/or the output current of the power supply device, to reduce the voltage difference of the charging management circuit 24. In another example, the power supply device 10 initiates the communication to enquire the communication control circuit 23 whether to reduce the voltage difference of the charging management circuit 24. If the voltage difference needs to be reduced, the communication control circuit 23 can respond to the inquiry of the power supply device 10 to instruct the power supply device 10 to reduce the voltage difference.

According to implementations, a preset range of voltage difference can be set in advance, and in such a preset range, the conversion efficiency of the charging management circuit may be high. The power supply device 10 adjusts the output voltage thereof, such that the voltage difference of the charging management circuit 24 is within the preset range, which is beneficial to improving the conversion efficiency of the charging management circuit 24 and reducing heating of the charging management circuit.

The preset range can refer to a range in which the conversion efficiency of the charging management circuit 24 can be relatively high. For example, the conversion efficiency of the charging management circuit 24 can be high when the voltage difference is between 0 and 500mV. Therefore, the preset range can be set to be 0~500mV.

The communication control circuit 23 can detect the voltage difference of the charging management circuit 24. When the voltage difference is not within the preset range, the communication control circuit 23 instructs the power supply device 10 to adjust the output voltage of the power supply device to reduce the voltage difference. As such, the charging management circuit 24 can work continuously at a high conversion efficiency, which can allow for reduced heating of the charging management circuit 24, thereby further reducing heating of the device to-be-charged.

As an example, the power supply device 10 with a 5V output voltage charges a battery that includes two cells. The boost circuit 22 can be a boost circuit with a boost factor of 2:1. The communication control circuit 23 can communicate with the charging management circuit 24 and know how to set magnitude of the input voltage of the charging management circuit in the present charging state to obtain a high conversion efficiency of the charging management circuit. For example, when the output voltage of the charging management circuit 24 is *V₁*, the charging management circuit 24 has a high conversion efficiency if the input voltage of the charging management circuit 24 is *V₁~V₁*±500mV Since the boost circuit 22 has a boost factor of 2:1, the charging management circuit 24 has a high conversion efficiency when the input voltage of the boost circuit 22 is within the range of (*V₁~V₁*±500mV)/2. Therefore, the communication control circuit 23 can communicate with the power supply device 10 to instruct the power supply device 10 to adjust the output voltage of the power supply device such that the output voltage of the power supply device 10 is within the range of (*V₁*~*V₁*±500mV)/2. In this way, the charging management circuit 24 can receive the desired input voltage, which can allow the voltage difference of the charging management circuit 24 to be 0~500mV, thereby improving the conversion efficiency of the charging management circuit 24.

The communication control circuit 23 can communicate with the power supply device 10 and the charging management circuit 24 during charging, such that the charging management circuit 24 works continuously at a high conversion efficiency. As such, a conversion efficiency of the charging apparatus 20 will be high, and heating can be reduced during charging.

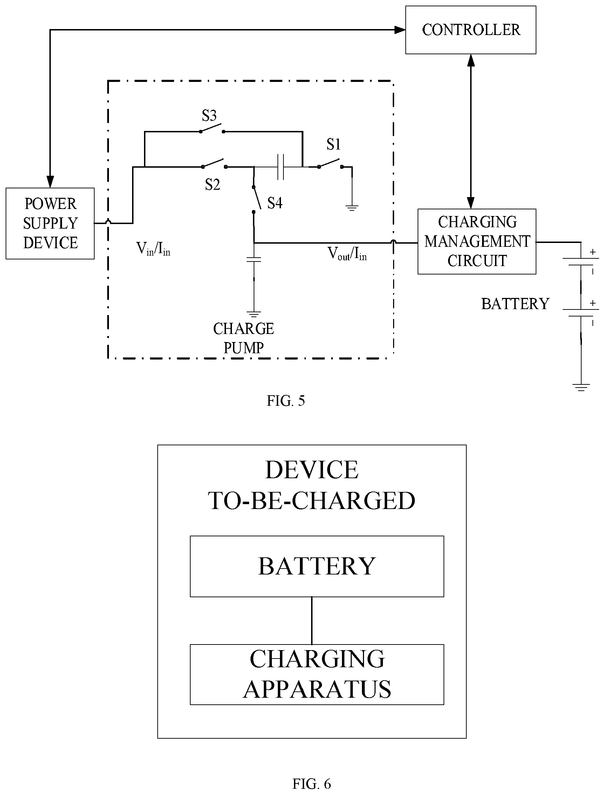

The charging apparatus according to implementations will be described hereinafter with reference to FIG 5. The charge pump illustrated in FIG 5 is a voltage doubler charge pump. An input voltage of the charge pump is *Vᵢₙ*, an input current of the charge pump is *Iᵢₙ*, an output voltage of the charge pump is *Vₒᵤₜ*, and an output current of the charge pump is *Iₒᵤₜ.* The charge pump can have an input end electrically coupled with the output end of the power supply device and have an output end electrically coupled with the input end of the charging management circuit. The output end of the charging management circuit can be electrically coupled with the battery. The battery illustrated in FIG 5 includes two cells.

The charging management circuit can be configured to perform constant-voltage and/or constant-current control on the output voltage of the charge pump and the output current of the charge such that the output voltage of the charging management circuit and the output current of the charging management circuit match the charging voltage and the charging current required by the battery.

According to working principles of the charge pump, without taking conversion efficiency into consideration, *Vₒᵤₜ*=2^{∗}*Vᵢₙ*, and *Iₒᵤₜ*=*Iᵢₙ*/2.

The charge pump can share part of the function of voltage boosting, which may reduce the need of a boosting operation of the charging management circuit by the charging apparatus, thereby reducing heating of the charging management circuit. In addition, since the charge pump has a conversion efficiency that is higher than the charging management circuit, when increasing voltage by the same magnitude, heating of the charge pump is lower than that of the charging management circuit. Therefore, by introducing the charge pump into the charging apparatus, heating of the charging apparatus can be reduced.

For example, an output voltage of a common power supply device is generally about 5V, and a voltage of a battery including two cells is generally higher than 8V. If the common power supply device is used for charging of the two cells, a voltage to be applied to the two cells for charging is usually required to be higher than 10V Suppose that a charging voltage of the two cells is 11V. If only the charging management circuit is used for voltage boosting in the charging apparatus, the charging management circuit is required to boost the output voltage of the power supply device by 6V, and accordingly the voltage difference of the charging management circuit is 6V On the other hand, if both a voltage doubler charge pump and the charging management circuit are used for voltage boosting in the charging apparatus, the charge pump can bear a boost voltage difference of 5V, whereas the charging management circuit is required to boost the output voltage of the charge pump by 1V only, such that charging requirements of the battery can be satisfied.

By introducing the charge pump, the voltage difference of the charging management circuit can be reduced significantly. Since the conversion efficiency of the charging management circuit may correlate with the voltage difference, heating of charge management circuit can be reduced accordingly after the voltage difference is reduced.

In addition, since the conversion efficiency of the charge pump is higher than that of the charging management circuit, heat generated by boosting voltage by 5V by the charging management circuit is higher than heat generated by boosting voltage by 5V by the charge pump. Therefore, even if the charge pump is introduced to the charging apparatus, heat generated by boosting voltage by 6V cooperatively by the charge pump and the charging management circuit is lower than heat produced by boosting voltage by 6V by the charging management circuit only, and as such, heating of the charging apparatus can be reduced.

Furthermore, since the conversion efficiency of the charging management circuit may correlate with the voltage difference of the charging management circuit, the conversion efficiency of the charging management circuit can be high when the voltage difference is within a certain range. During charging, a higher conversion efficiency of the charging management circuit is desired because higher conversion efficiency leads to a reduction in heating.

Therefore, a controller can be adopted in the charging apparatus to control the voltage difference of the charging management circuit, such that the conversion efficiency of the charging management circuit can be high. The controller may be the communication control circuit described in implementations.

The controller can communicate with the charging management circuit during charging to acquire state information of the charging management circuit, where the state information of the charging management circuit includes the output voltage of the charging management circuit and/or the voltage difference of the charging management circuit. The controller can adjust the output voltage of the power supply device and/or the output current of the power supply device according to the state information of the charging management circuit, to adjust an input voltage of the power supply device, such that the voltage difference is controlled to be within a proper range.

In an example, the controller knows in advance that the conversion efficiency of the charging management circuit is high when the voltage difference between the input voltage of the charging management circuit and the output voltage of the charging management circuit is within a first preset range. After acquiring a present output voltage of the charging management circuit, the controller determines, according to the first preset range, how to set magnitude of the input voltage of the charging management circuit to obtain a high conversion efficiency of the charging management circuit. Suppose that the controller determines that the conversion efficiency of the charging management circuit is high when the input voltage of the charging management circuit is within a first range. Accordingly, the controller controls, according to the determined input voltage of the charging management circuit, the power supply device to adjust the output voltage of the power supply device and/or the output current of the power supply device such that the input voltage of the charging management circuit is within the first range.

Upon determining that the conversion efficiency of the charging management circuit is high when the input voltage of the charging management circuit is *Vₘ*, due to existence of the voltage doubler charge pump, the controller can control the output voltage of the power supply device to be *Vₘ*/2 without considering path loss. In this way, the charging management circuit can receive a desired input voltage and achieve a high conversion efficiency.

In another example, the controller acquires the voltage difference of the charging management circuit. In this situation, the controller can compare a real voltage difference of the charging management circuit (that is, a real voltage difference between the input voltage of the charging management circuit and the output voltage of the charging management circuit) with the first preset range. If the real voltage difference is beyond the first preset range and the input voltage of the charging management circuit is lower than the output voltage of the charging management circuit, the controller controls the power supply device to increase the output voltage of the power supply device. If the real voltage difference is beyond the first preset range and the input voltage of the charging management circuit is higher than the output voltage of the charging management circuit, the controller controls the power supply device to decrease the output voltage of the power supply device. If the real voltage difference is within the first preset range, no adjustment is made to the output voltage of the power supply device.

The controller can communicate continuously with the charging management circuit and the power supply device during the whole charging process, such that the charging management circuit works continuously at a high conversion efficiency. In this way, a charging system can work continuously at an optimal efficiency, which ensures charging efficiency while reducing heating.

In the foregoing implementations, the input end of the charging management circuit 24 is electrically coupled with the output end of the boost circuit 22, but implementations are not limited hereto. For example, the charging management circuit 24 may be arranged before the boost circuit 22. In other words, the input end of the charging management circuit 24 is electrically coupled with the output end of the power supply device 10, and the output end of the charging management circuit 24 is electrically coupled with the input end of the boost circuit 22. The charging management circuit 24 can perform constant-voltage and/or constant-current control on the output voltage of the power supply device 10 and/or the output current of the power supply device 10.

For example, the boost circuit 22 has a boost factor of 2:1, and the charging current currently required by the battery 30 is *Iₓ*. The charging management circuit 24 performs constant-current control on the output current of the power supply device 10, make the output current of the charging management circuit 24 stable at *Iₓ*/2. As such, the output current of the charging management circuit 24 subjected to boost conversion by the boost circuit 22 is steadily *Iₓ*, to meet present charging requirements of the battery 30.

As illustrated in FIG 6, a device to-be-charged is further provided. The device to-be-charged includes a battery and the charging apparatus described in any one of the foregoing implementations.

In some implementations, the battery includes multiple cells.

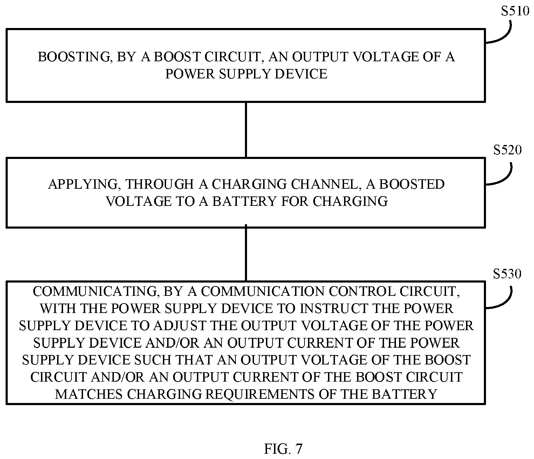

Apparatus implementations have been elaborated above with reference to FIG 1 to FIG 6. Hereinafter, method implementations will be described in detail with reference to FIG 7. Method implementations and apparatus implementations correspond to each other. Therefore, for details not described in method implementations, reference can be made to the foregoing apparatus implementations.

FIG 7 is a schematic flowchart of a charging method according to implementations. The method is applicable to a charging apparatus such as, for example, the charging apparatus 20 described in the foregoing implementations. The method illustrated in FIG 7 includes operations at step S510 to step S530.

At step S510, a boost circuit boosts an output voltage of a power supply device.

At step S520, a boosted voltage is applied to a battery for charging through a charging channel.

At step S530, a communication control circuit communicates with the power supply device to instruct the power supply device to adjust the output voltage of the power supply device and/or an output current of the power supply device such that an output voltage of the boost circuit and/or an output current of the boost circuit matches charging requirements of the battery.

In some implementations, the power supply device can be instructed to adjust the output voltage of the power supply device and/or the output current of the power supply device as follows. The power supply device may be instructed, according to state information of the battery, to adjust the output voltage of the power supply device and/or the output current of the power supply device, where the state information of the battery includes at least one of: a charging voltage, a charging current, a present electric quantity, a present voltage, and a present temperature.

In some implementations, the boost circuit has an input end electrically coupled with an output end of the power supply device and has an output end electrically coupled with the battery. The power supply device is instructed as follows. The power supply device is instructed to adjust the output voltage of the power supply device and/or the output current of the power supply device such that the output voltage of the boost circuit and/or the output current of the boost circuit matches a charging voltage and/or a charging current required by the battery.

In some implementations, the power supply device is instructed, according to the state information of the battery, to adjust the output voltage of the power supply device and/or the output current of the power supply device as follows. A target charging current is determined according to the state information of the battery. The power supply device is instructed, according to the target charging current, to adjust the output voltage of the power supply device and/or the output current of the power supply device.

In some implementations, the power supply device is instructed, according to the target charging current, to adjust the output voltage of the power supply device and/or the output current of the power supply device as follows. Adjustment information is sent to the power supply device according to a difference between the target charging current and the output current of the power supply device, to instruct the power supply device to adjust the output voltage of the power supply device and/or the output current of the power supply device.

In some implementations, the method further includes the following. A charging management circuit manages the output voltage of the boost circuit, where a voltage difference between an input voltage of the charging management circuit and an output voltage of the charging management circuit is smaller than a voltage difference between the input voltage of the boost circuit and the output voltage of the charging management circuit.

In some implementations, the method further includes the following. The communication control circuit communicates with the power supply device to instruct the power supply device to adjust the output voltage of the power supply device, to adjust the voltage difference between the input voltage of the charging management circuit and the output voltage of the charging management circuit.

In some implementations, the communication control circuit communicates with the power supply device to instruct the power supply device to adjust the output voltage of the power supply device as follows. The communication control circuit communicates with the power supply device according to the voltage difference between the input voltage of the charging management circuit and the output voltage of the charging management circuit, to instruct the power supply device to adjust the output voltage of the power supply device to reduce the voltage difference between the input voltage of the charging management circuit and the output voltage of the charging management circuit.

In some implementations, the power supply device is instructed to adjust the output voltage of the power supply device as follows. The power supply device is instructed to adjust the output voltage of the power supply device such that the voltage difference between the input voltage of the charging management circuit and the output voltage of the charging management circuit is within a preset range.

In some implementations, the boost circuit has a conversion efficiency that is higher than the charging management circuit.

In some implementations, the boost circuit is a charge pump.

In some implementations, a charging stage of the battery is a constant-current charging stage.

In some implementations, the battery includes multiple cells.

All or part of the above implementations can be implemented through software, hardware, firmware, or any other combination thereof. When implemented by software, all or part of the above implementations can be implemented in the form of a computer program product. The computer program product includes one or more computer instructions. When the computer instructions are applied and executed on a computer, all or part of the operations or functions of the implementations of the disclosure are performed. The computer can be a general-purpose computer, a special-purpose computer, a computer network, or other programmable apparatuses. The computer instruction can be stored in a computer readable storage medium or transmitted from one computer readable storage medium to another computer readable storage medium. For example, the computer instruction can be transmitted from one website, computer, server, or data center to another website, computer, server, or data center in a wired manner or in a wireless manner. Examples of the wired manner can be a coaxial cable, an optical fiber, a DSL, etc. The wireless manner can be, for example, infrared, wireless, microwave, etc. The computer readable storage medium can be any computer accessible usable-medium or a data storage device such as, for example, a server, a data center, or the like which is integrated with one or more usable media. The usable medium can be a magnetic medium (such as, for example, a soft disc, a hard disc, or a magnetic tape), an optical medium (such as, for example, a digital video disc (DVD)), or a semiconductor medium (such as, for example, a solid state disk (SSD)), etc.

Those of ordinary skill in the art will appreciate that units and algorithmic operations of various examples described in connection with implementations herein can be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the described functionality, but such methods should not be regarded as lying beyond the scope of the disclosure.

It will be appreciated that the systems, apparatuses, and methods disclosed in implementations herein may also be implemented in various other manners. For example, the above apparatus implementations are merely illustrative, e.g., the division of units is only a division of logical functions, and there may exist other ways of division in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device or unit, and may be electrical, mechanical, or otherwise.

Separated units as illustrated may or may not be physically separated. Components displayed as units may or may not be physical units and may reside at one location or may be distributed to multiple networked units. Some or all of the units may be selectively adopted according to practical needs to achieve desired objectives of the disclosure.

Various functional units described in implementations herein may be integrated into one processing unit or may be present as a number of physically separated units, and two or more units may be integrated into one.

## Claims

1. A charging apparatus (20), comprising:
a boost circuit (22) configured to boost an output voltage of a power supply device (10),
a charging channel (21) through which a boosted voltage is applied to a battery (30) for charging; and
a communication control circuit (23) configured to communicate with the power supply device (10) to instruct the power supply device (10) to adjust at least one of the output voltage of the power supply device (10) and an output current of the power supply device (10) such that at least one of an output voltage of the boost circuit (22) and an output current of the boost circuit (22) matches charging requirements of the battery (30).

2. The charging apparatus (20) of claim 1, wherein the communication control circuit (23) configured to instruct the power supply device (10) to adjust the at least one of the output voltage of the power supply device (10) and the output current of the power supply device (10) is configured to:
instruct, according to state information of the battery (30), the power supply device (10) to adjust the at least one of the output voltage of the power supply device (10) and the output current of the power supply device (10), wherein the state information of the battery (30) comprises at least one of: a charging voltage, a charging current, a present electric quantity, a present voltage, and a present temperature.

3. The charging apparatus (20) of claim 2, wherein:
the boost circuit (22) has an input end electrically coupled with an output end of the power supply device (10) and has an output end electrically coupled with the battery (30);
the communication control circuit (23) is configured to:
instruct the power supply device (10) to adjust the at least one of the output voltage of the power supply device (10) and the output current of the power supply device (10) such that the at least one of the output voltage of the boost circuit (22) and the output current of the boost circuit (22) matches at least one of a charging voltage and a charging current required by the battery (30).

4. The charging apparatus (20) of claim 2 or 3, wherein the communication control circuit (23) configured to instruct, according to state information of the battery (30), the power supply device (10) to adjust the at least one of the output voltage of the power supply device (10) and the output current of the power supply device (10) is configured to:
determine a target charging current according to the state information of the battery (30); and
instruct, according to the target charging current, the power supply device (10) to adjust the at least one of the output voltage of the power supply device (10) and the output current of the power supply device (10).

5. The charging apparatus (20) of claim 4, wherein the communication control circuit (23) configured to instruct, according to the target charging current, the power supply device (10) to adjust the at least one of the output voltage of the power supply device (10) and the output current of the power supply device (10) is configured to:
send adjustment information to the power supply device (10) according to a difference between the target charging current and the output current of the power supply device, to instruct the power supply device (10) to adjust the at least one of the output voltage of the power supply device (10) and the output current of the power supply device (10).

6. The charging apparatus (20) of claim 1, further comprising:
a charging management circuit (24) configured to manage the output voltage of the boost circuit (22), wherein a voltage difference between an input voltage of the charging management circuit (24) and an output voltage of the charging management circuit (24) is smaller than a voltage difference between the input voltage of the boost circuit (22) and the output voltage of the charging management circuit (24).

7. The charging apparatus (20) of claim 6, wherein the communication control circuit (23) is further configured to:
instruct the power supply device (10) to adjust the output voltage of the power supply device (10), to adjust the voltage difference between the input voltage of the charging management circuit (24) and the output voltage of the charging management circuit (24).

8. The charging apparatus (20) of claim 7, wherein the communication control circuit (23) is configured to:
communicate with the power supply device (10) according to the voltage difference between the input voltage of the charging management circuit (24) and the output voltage of the charging management circuit (24), to instruct the power supply device (10) to adjust the output voltage of the power supply device (10) to reduce the voltage difference between the input voltage of the charging management circuit (24) and the output voltage of the charging management circuit (24).

9. The charging apparatus (20) of claim 7 or 8, wherein the communication control circuit (23) configured to:
instruct the power supply device (10) to adjust the output voltage of the power supply device (10) such that the voltage difference between the input voltage of the charging management circuit (24) and the output voltage of the charging management circuit (24) is within a preset range.

10. The charging apparatus (20) of any of claims 6 to 9, wherein the boost circuit (22) has a conversion efficiency that is higher than the charging management circuit (24).

11. The charging apparatus (20) of any of claims 1 to 10, wherein a charging stage of the battery (30) is a constant-current charging stage.

12. The charging apparatus (20) of any of claims 1 to 11, wherein the battery (30) comprises a plurality of cells.

13. A device to-be-charged, comprising:
a battery (30); and
the charging apparatus (20) of any of claims 1 to 12.

14. A charging method, comprising:
boosting, by a boost circuit (22), an output voltage of a power supply device (10),;
applying, through a charging channel (21), a boosted voltage to a battery (30) for charging; and
communicating, by a communication control circuit (23), with the power supply device (10) to instruct the power supply device (10) to adjust at least one of the output voltage of the power supply device (10) and an output current of the power supply device (10) such that at least one of an output voltage of the boost circuit (22) and an output current of the boost circuit (22) matches charging requirements of the battery (30).

15. The charging method of claim 14 implemented on a charging apparatus (20) according to any one of claims 2 to 12.

## Patentansprüche

1. Ladeeinrichtung (20), die Folgendes umfasst:
eine Aufwärtswandlungsschaltung (22), ausgelegt zum Aufwärtswandeln einer Ausgangsspannung einer Leistungsversorgungsvorrichtung (10),
einen Ladekanal (21), über den eine aufwärtsgewandelte Spannung zum Laden an eine Batterie (30) angelegt wird; und
eine Kommunikationssteuerschaltung (23), ausgelegt zum Kommunizieren mit der Leistungsversorgungsvorrichtung (10), um die Leistungsversorgungsvorrichtung (10) dazu anzuweisen, die Ausgangsspannung der Leistungsversorgungsvorrichtung (10) und/oder einen Ausgangsstrom der Leistungsversorgungsvorrichtung (10) derart anzupassen, dass eine Ausgangsspannung der Aufwärtswandlungsschaltung (22) und/oder ein Ausgangsstrom der Aufwärtswandlungsschaltung (22) mit Ladeanforderungen der Batterie (30) übereinstimmt.

2. Ladeeinrichtung (20) nach Anspruch 1, wobei die Kommunikationssteuerschaltung (23), ausgelegt zum Anweisen der Leistungsversorgungsvorrichtung (10) zum Anpassen der Ausgangsspannung der Leistungsversorgungsvorrichtung (10) und/oder des Ausgangsstroms der Leistungsversorgungsvorrichtung (10), zu Folgendem ausgelegt ist:
Anweisen, gemäß Zustandsinformationen der Batterie (30), der Leistungsversorgungsvorrichtung (10) zum Anpassen der Ausgangsspannung der Leistungsversorgungsvorrichtung (10) und/oder des Ausgangsstroms der Leistungsversorgungsvorrichtung (10), wobei die Zustandsinformationen der Batterie (30) mindestens eines der Folgenden umfassen: eine Ladespannung, einen Ladestrom, eine vorliegende elektrische Größe, eine vorliegende Spannung und eine vorliegende Temperatur.

3. Ladeeinrichtung (20) nach Anspruch 2, wobei:
die Aufwärtswandlungsschaltung (22) ein mit einem Ausgangsende der Leistungsversorgungsvorrichtung (10) elektrisch gekoppeltes Eingangsende und ein mit der Batterie (30) elektrisch gekoppeltes Ausgangsende aufweist;
die Kommunikationssteuerschaltung (23) zu Folgendem ausgelegt ist:
Anweisen der Leistungsversorgungsvorrichtung (10) zum Anpassen der Ausgangsspannung der Leistungsversorgungsvorrichtung (10) und/oder des Ausgangsstroms der Leistungsversorgungsvorrichtung (10), sodass die Ausgangsspannung der Aufwärtswandlungsschaltung (22) und/oder der Ausgangsstrom der Aufwärtswandlungsschaltung (22) mit einer durch die Batterie (30) erforderten Ladespannung und/oder einem durch die Batterie (30) erforderten Ladestrom übereinstimmt.

4. Ladeeinrichtung (20) nach Anspruch 2 oder 3, wobei die Kommunikationssteuerschaltung (23), ausgelegt zum Anweisen, gemäß Zustandsinformationen der Batterie (30), der Leistungsversorgungsvorrichtung (10) zum Anpassen der Ausgangsspannung der Leistungsversorgungsvorrichtung (10) und/oder des Ausgangsstroms der Leistungsversorgungsvorrichtung (10), zu Folgendem ausgelegt ist:
Bestimmen eines Sollladestroms gemäß den Zustandsinformationen der Batterie (30); und
Anweisen, gemäß dem Sollladestrom, der Leistungsversorgungsvorrichtung (10) zum Anpassen der Ausgangsspannung der Leistungsversorgungsvorrichtung (10) und/oder des Ausgangsstroms der Leistungsversorgungsvorrichtung (10).

5. Ladevorrichtung (20) nach Anspruch 4, wobei die Kommunikationssteuerschaltung (23), ausgelegt zum Anweisen, gemäß dem Sollladestrom, der Leistungsversorgungsvorrichtung (10) zum Anpassen der Ausgangsspannung der Leistungsversorgungsvorrichtung (10) und/oder des Ausgangsstroms der Leistungsversorgungsvorrichtung (10), zu Folgendem ausgelegt ist:
Senden von Anpassungsinformationen an die Leistungsversorgungvorrichtung (10) gemäß einer Differenz zwischen dem Sollladestrom und dem Ausgangsstrom der Leistungsversorgungsvorrichtung zum Anweisen der Leistungsversorgungsvorrichtung (10) zum Anpassen der Ausgangsspannung der Leistungsversorgungsvorrichtung (10) und/oder des Ausgangsstroms der Leistungsversorgungsvorrichtung (10).

6. Ladeeinrichtung (20) nach Anspruch 1, die ferner Folgendes umfasst:
eine Ladeverwaltungsschaltung (24), ausgelegt zum Verwalten der Ausgangsspannung der Aufwärtswandlungsschaltung (22), wobei eine Spannungsdifferenz zwischen einer Eingangsspannung der Ladeverwaltungsschaltung (24) und einer Ausgangsspannung der Ladeverwaltungsschaltung (24) kleiner als eine Spannungsdifferenz zwischen der Eingangsspannung der Aufwärtswandlungsschaltung (22) und der Ausgangsspannung der Ladeverwaltungsschaltung (24) ist.

7. Ladeeinrichtung (20) nach Anspruch 6, wobei die Kommunikationssteuerschaltung (23) ferner zu Folgendem ausgelegt ist:
Anweisen der Leistungsversorgungsvorrichtung (10) zum Anpassen der Ausgangsspannung der Leistungsversorgungsvorrichtung (10), um die Spannungsdifferenz zwischen der Eingangsspannung der Ladeverwaltungsschaltung (24) und der Ausgangsspannung der Ladeverwaltungsschaltung (24) anzupassen.

8. Ladeeinrichtung (20) nach Anspruch 7, wobei die Kommunikationssteuerschaltung (23) zu Folgendem ausgelegt ist:
Kommunizieren mit der Leistungsversorgungsvorrichtung (10) gemäß der Spannungsdifferenz zwischen der Eingangsspannung der Ladeverwaltungsschaltung (24) und der Ausgangsspannung der Ladeverwaltungsschaltung (24) zum Anweisen der Leistungsversorgungsvorrichtung (10) zum Anpassen der Ausgangsspannung der Leistungsversorgungsvorrichtung (10), um die Spannungsdifferenz zwischen der Eingangsspannung der Ladeverwaltungsschaltung (24) und der Ausgangsspannung der Ladeverwaltungsschaltung (24) zu reduzieren.

9. Ladeeinrichtung (20) nach Anspruch 7 oder 8, wobei die Kommunikationssteuerschaltung (23) zu Folgendem ausgelegt ist:
Anweisen der Leistungsversorgungsvorrichtung (10) zum Anpassen der Ausgangsspannung der Leistungsversorgungsvorrichtung (10), sodass die Spannungsdifferenz zwischen der Eingangsspannung der Ladeverwaltungsschaltung (24) und der Ausgangsspannung der Ladeverwaltungsschaltung (24) innerhalb eines vorgegebenen Bereichs liegt.

10. Ladeeinrichtung (20) nach einem der Ansprüche 6 bis 9, wobei die Aufwärtswandlungsschaltung (22) eine höhere Wandlungseffizienz als die Ladeverwaltungsschaltung (24) aufweist.

11. Ladeeinrichtung (20) nach einem der Ansprüche 1 bis 10, wobei eine Ladephase der Batterie (30) eine Konstantstromladephase ist.

12. Ladeeinrichtung (20) nach einem der Ansprüche 1 bis 11, wobei die Batterie (30) mehrere Zellen umfasst.

13. Zu ladende Vorrichtung, die Folgendes umfasst:
eine Batterie (30); und
die Ladeeinrichtung (20) nach einem der Ansprüche 1 bis 12.

14. Ladeverfahren, das Folgendes umfasst:
Aufwärtswandeln, durch eine Aufwärtswandlungsschaltung (22), einer Ausgangsspannung einer Leistungsversorgungsvorrichtung (10),
Anlegen, über einen Ladekanal (21), einer aufwärtsgewandelten Spannung zum Laden an eine Batterie (30); und
Kommunizieren, durch eine Kommunikationssteuerschaltung (23), mit der Leistungsversorgungsvorrichtung (10), um die Leistungsversorgungsvorrichtung (10) dazu anzuweisen, die Ausgangsspannung der Leistungsversorgungsvorrichtung (10) und/oder einen Ausgangsstrom der Leistungsversorgungsvorrichtung (10) derart anzupassen, dass eine Ausgangsspannung der Aufwärtswandlungsschaltung (22) und/oder ein Ausgangsstrom der Aufwärtswandlungsschaltung (22) mit Ladeanforderungen der Batterie (30) übereinstimmt.

15. Ladeverfahren nach Anspruch 14, implementiert in einer Ladevorrichtung (20) nach einem der Ansprüche 2 bis 12.

## Revendications

1. Appareil de charge (20), comprenant :
un circuit d'amplification (22) configuré pour amplifier une tension de sortie d'un dispositif d'alimentation électrique (10) ;
un canal de charge (21) par l'intermédiaire duquel une tension amplifiée est appliquée à une batterie (30) pour la charge ; et
un circuit de commande de communication (23) configuré pour communiquer avec le dispositif d'alimentation électrique (10) de façon à ordonner au dispositif d'alimentation électrique (10) d'ajuster au moins l'un de la tension de sortie du dispositif d'alimentation électrique (10) et d'un courant de sortie du dispositif d'alimentation électrique (10) de telle sorte qu'au moins l'un d'une tension de sortie du circuit d'amplification (22) et d'un courant de sortie du circuit d'amplification (22) corresponde à des exigences de charge de la batterie (30) .

2. Appareil de charge (20) selon la revendication 1, dans lequel le circuit de commande de communication (23) configuré pour ordonner au dispositif d'alimentation électrique (10) d'ajuster ledit au moins un de la tension de sortie du dispositif d'alimentation électrique (10) et du courant de sortie du dispositif d'alimentation électrique (10) est configuré pour :
ordonner, selon des informations d'état de la batterie (30), au dispositif d'alimentation électrique (10) d'ajuster au moins l'un de la tension de sortie du dispositif d'alimentation électrique (10) et du courant de sortie du dispositif d'alimentation électrique (10), dans lequel les informations d'état de la batterie (30) comprennent au moins l'un : d'une tension de charge, d'un courant de charge, d'une grandeur électrique actuelle, d'une tension actuelle et d'une température actuelle.

3. Appareil de charge (20) selon la revendication 2, dans lequel :
le circuit d'amplification (22) présente une extrémité d'entrée couplée électriquement à une extrémité de sortie du dispositif d'alimentation électrique (10) et présente une extrémité de sortie couplée électriquement à la batterie (30) ;
le circuit de commande de communication (23) est configuré pour :
ordonner au dispositif d'alimentation électrique (10) d'ajuster au moins l'un de la tension de sortie du dispositif d'alimentation électrique (10) et du courant de sortie du dispositif d'alimentation électrique (10) de telle sorte qu'au moins l'un de la tension de sortie du circuit d'amplification (22) et du courant de sortie du circuit d'amplification (22) corresponde à au moins l'un d'une tension de charge et d'un courant de charge requis par la batterie (30).

4. Appareil de charge (20) selon la revendication 2 ou 3, dans lequel le circuit de commande de communication (23) configuré pour ordonner, selon des informations d'état de la batterie (30), au dispositif d'alimentation électrique (10) d'ajuster ledit au moins un de la tension de sortie du dispositif d'alimentation électrique (10) et du courant de sortie du dispositif d'alimentation électrique (10) est configuré pour :
déterminer un courant de charge cible selon les informations d'état de la batterie (30) ; et
ordonner, selon le courant de charge cible, au dispositif d'alimentation électrique (10) d'ajuster ledit au moins un de la tension de sortie du dispositif d'alimentation électrique (10) et du courant de sortie du dispositif d'alimentation électrique (10).

5. Appareil de charge (20) selon la revendication 4, dans lequel le circuit de commande de communication (23) configuré pour ordonner, selon le courant de charge cible, au dispositif d'alimentation électrique (10) d'ajuster ledit au moins un de la tension de sortie du dispositif d'alimentation électrique (10) et du courant de sortie du dispositif d'alimentation électrique (10) est configuré pour :
envoyer des informations d'ajustement au dispositif d'alimentation électrique (10) selon une différence entre le courant de charge cible et le courant de sortie du dispositif d'alimentation électrique, pour ordonner au dispositif d'alimentation électrique (10) d'ajuster ledit au moins un de la tension de sortie du dispositif d'alimentation électrique (10) et du courant de sortie du dispositif d'alimentation électrique (10).

6. Appareil de charge (20) selon la revendication 1, comprenant en outre :
un circuit de gestion de charge (24) configuré pour gérer la tension de sortie du circuit d'amplification (22), dans lequel une différence de tension entre une tension d'entrée du circuit de gestion de charge (24) et une tension de sortie du circuit de gestion de charge (24) est inférieure à une différence de tension entre la tension d'entrée du circuit d'amplification (22) et la tension de sortie du circuit de gestion de charge (24).

7. Appareil de charge (20) selon la revendication 6, dans lequel le circuit de commande de communication (23) est en outre configuré pour :
ordonner au dispositif d'alimentation électrique (10) d'ajuster la tension de sortie du dispositif d'alimentation électrique (10), afin d'ajuster la différence de tension entre la tension d'entrée du circuit de gestion de charge (24) et la tension de sortie du circuit de gestion de charge (24).

8. Appareil de charge (20) selon la revendication 7, dans lequel le circuit de commande de communication (23) est configuré pour :
communiquer avec le dispositif d'alimentation électrique (10) selon la différence de tension entre la tension d'entrée du circuit de gestion de charge (24) et la tension de sortie du circuit de gestion de charge (24), de façon à ordonner au dispositif d'alimentation électrique (10) d'ajuster la tension de sortie du dispositif d'alimentation électrique (10) afin de réduire la différence de tension entre la tension d'entrée du circuit de gestion de charge (24) et la tension de sortie du circuit de gestion de charge (24).

9. Appareil de charge (20) selon la revendication 7 ou 8, dans lequel le circuit de commande de communication (23) est configuré pour :
ordonner au dispositif d'alimentation électrique (10) d'ajuster la tension de sortie du dispositif d'alimentation électrique (10) de telle sorte que la différence de tension entre la tension d'entrée du circuit de gestion de charge (24) et la tension de sortie du circuit de gestion de charge (24) se situe dans une plage prédéfinie.

10. Appareil de charge (20) selon l'une quelconque des revendications 6 à 9, dans lequel le circuit d'amplification (22) présente un rendement de conversion qui est supérieur à celui du circuit de gestion de charge (24) .

11. Appareil de charge (20) selon l'une quelconque des revendications 1 à 10, dans lequel un étage de charge de la batterie (30) est un étage de charge à courant constant.

12. Appareil de charge (20) selon l'une quelconque des revendications 1 à 11, dans lequel la batterie (30) comprend une pluralité de cellules.

13. Dispositif à charger, comprenant :
une batterie (30) ; et
l'appareil de charge (20) selon l'une quelconque des revendications 1 à 12.

14. Procédé de charge, comprenant :
l'amplification, par un circuit d'amplification (22), d'une tension de sortie d'un dispositif d'alimentation électrique (10) ;
l'application, par l'intermédiaire d'un canal de charge (21), d'une tension amplifiée à une batterie (30) pour la charge ; et
la communication, par un circuit de commande de communication (23), avec le dispositif d'alimentation électrique (10) de façon à ordonner au dispositif d'alimentation électrique (10) d'ajuster au moins l'un de la tension de sortie du dispositif d'alimentation électrique (10) et d'un courant de sortie du dispositif d'alimentation électrique (10) de telle sorte qu'au moins l'un d'une tension de sortie du circuit d'amplification (22) et d'un courant de sortie du circuit d'amplification (22) corresponde à des exigences de charge de la batterie (30) .

15. Procédé de charge selon la revendication 14 mis en œuvre sur un appareil de charge (20) selon l'une quelconque des revendications 2 à 12.
